# EUROPÄISCHE PATENTSCHRIFT

(11) **EP 3 554 686 B1**
(45) Veröffentlichungstag und Bekanntmachung des Hinweises auf die Patenterteilung: **20.09.2023**
(21) Anmeldenummer: 17828866.8
(22) Anmeldetag: 13.12.2017
(51) Int. Cl.: B01J 21/06, B01J 37/02, B01J 37/08, B01J 37/10

(54) **VERFAHREN ZUM BINDEMITTELFREIEN AUFBRINGEN PHOTOKATALYTISCHER BESCHICHTUNGEN**
METHOD FOR APPLYING PHOTOCATALYTIC COATINGS WITHOUT USING BINDERS
PROCÉDÉ D'APPLICATION DE REVÊTEMENTS PHOTOCATALYTIQUES SANS EMPLOYER DE LIANT

(30) Priorität: 15.12.2016 DE 102016225106
(43) Veröffentlichungstag der Anmeldung: 23.10.2019
(73) Patentinhaber: Lynatox GmbH, 99885 Ohrdruf (DE)
(72) Erfinder: SCHNABEL, Tobias, 99438 Bad Berka (DE); HAHN, Christopher, 99885 Wöflis (DE)
(74) Vertreter: Liedtke & Partner Patentanwälte
(86) Internationale Anmeldenummer: PCT/EP2017/082631
(87) Internationale Veröffentlichungsnummer: WO 2018/109013

(56) Entgegenhaltungen:
- EP-A1- 1 118 385
- CN-U- 202 741 002
- DE-A1- 3 610 338
- US-A- 5 853 866
- US-A1- 2009 062 109
- US-A1- 2012 019 917
- US-A1- 2016 107 152
- K. Amini: "Manufacturing dye-sensitized solar cells", , 7. September 2011 (2011-09-07), XP002780177, Gefunden im Internet: URL:http://chemb125.chem.ucl.ac.uk/Documen ts%20for%20website/Manufacturing%20dye%20s ensitized%20solar%20cells.pdf [gefunden am 2018-04-12] in der Anmeldung erwähnt & "Index of /Documents for website", , 7. September 2011 (2011-09-07), Seiten 1-1, Gefunden im Internet: URL:http://chemb125.chem.ucl.ac.uk/Documen ts%20for%20website/ [gefunden am 2018-04-12]

## Beschreibung

Die Erfindung betrifft ein Verfahren zum bindemittelfreien Aufbringen photokatalytischer Beschichtungen auf Titandioxidbasis auf ein Trägermaterial.

Photokatalytische Beschichtungen auf Titandioxidbasis sind für vielfältige technische Anwendungsfelder von großer wirtschaftlicher Bedeutung. Wichtige Anwendungsgebiete sind z. B. das Herstellen von Beschichtungen auf Glas und Glaselementen im Wohnungsbau oder für Erzeugnisse der Automobilindustrie zum Erzeugen superhydrophober Schichten bei verschiedenen Trägermaterialien. Nachteilig bei der Herstellung von hochaktiven photokatalytischen Schichten mit einer hohen Konzentration an Titandioxid ist die mangelnde mechanische Beständigkeit der Beschichtung.

Für Titandioxidbeschichtungen ist das Aufbringen einer Suspension von Titandioxid in leichtflüchtigen Lösungsmitteln, wie z. B. Methanol, und das anschließende Sintern der Schicht in einer Hochtemperaturumgebung bekannt. Bei diesem Verfahren können jedoch nur mechanisch instabile Schichten mit geringer Abriebfestigkeit erzeugt werden, wodurch die Einsatzfelder stark eingeschränkt werden und die Beschichtungen in regelmäßigen Abständen erneuert werden müssen.

Beispielsweise ist dazu aus K. Amini, "Manufacturing dye-sensitized solar cells" ein Beschichtungsverfahren bekannt, bei dem eine Titandioxidsuspension als Beschichtung für eine Solarzelle aufgesprüht und gesintert wird.

Eine bekannte Methode beständigere und stabilere Schichten zu erzeugen besteht darin, ein Bindemittel, wie z. B. Wasserglas oder Siloxane, beizumischen. Nachteilig ist dabei, dass die Titandioxidpartikel mit dem eingesetzten Bindemittel umhüllt werden und die photokatalytische Beschichtung dadurch nur einschränkt wirksam ist.

Weiterhin ist nach DE 10 2014 100 385 A1 ein Plasmabeschichtungsverfahren zum Abscheiden einer Funktionsschicht eines Substrats und eine Vorrichtung zur Durchführung des Verfahrens bekannt. Hierbei wird ein atmosphärisches Plasma und ein inertes Trägergas verwendet, so dass einerseits sehr hohe Energien zum Starten einer chemischen Reaktion in das Beschichtungsmaterial eingebracht werden können, andererseits eine kontrollierbare chemische Reaktion unter Ausschluss von Luftsauerstoff im Plasma ermöglicht wird. Das Beschichtungsmaterial zur Bildung der Funktionsschicht wird über eine Einspeisung unmittelbar in das in einer Düse erzeugte Plasma unter Ausschluss von Sauerstoff eingespeist.

Damit können sehr stabile ebene Flächen erzeugt werden, die aber eine geringe fotokatalytische Aktivität aufweisen, weil die Flächen eine sehr geringe Porosität aufweisen.

Aus US 5 853 866 A ist ein Verfahren zur Herstellung eines multifunktionalen Materials bekannt.

Aus US 2012/019917 A1 ist ein Verfahren zur Herstellung eines transluzenten Verbundwerkstoffs bekannt.

Aus EP 1 118 385 A1 ist ein Verfahren zur Herstellung eines photokatalytisch aktiven Materials bekannt.

Aus US 2009/0062109 A1 ist ein Verfahren zur Herstellung eines katalytischen Materials bekannt.

Aus US 2016/0107152 A1 ein Verfahren zur Herstellung eines photokatalytischen Substrates bekannt.

Aus DE 36 10 338 A1 ist ein plattenförmiger Katalysator zur Verminderung der Stickoxide in Rauchgasen bekannt.

Aus der CN 202741002 U ist ein katalysatorbeschichtetes Filternetz bekannt.

Der Erfindung liegt die Aufgabe zu Grunde, ein Verfahren der eingangs genannten Art zu verbessern.

Die Aufgabe wird das Verfahren betreffend erfindungsgemäß gelöst durch ein Verfahren mit den im Anspruch 1 genannten Merkmalen.

Vorteilhafte Ausgestaltungen der Erfindung sind Gegenstand der Unteransprüche.

Mit dem Verfahren wird eine Titandioxidsuspension auf Basis einer Flüssigkeit als feines Aerosol auf einen heißen Träger gesprüht, wobei als Trägerflüssigkeit Wasser verwendet wird. Dabei verdampft die Flüssigkeit schlagartig und die Titandioxidpartikel der Titandioxidsuspension werden schlagartig auf das Trägermaterial aufgesintert.

Die mit dem Verfahren erzeugte Titandioxidschicht weist eine hohe Gleichmäßigkeit bei hoher Oberflächenqualität auf. Im Vergleich zu den bisher angewandten Methoden wird eine wesentlich effizientere photokatalytische Wirkung erzielt und eine hohe mechanische Stabilität erreicht, insbesondere ergibt sich eine hohe Abriebfestigkeit. Überraschend hat sich gezeigt, dass die derart erzielte Titandioxidschicht sowohl in sich stabil, insbesondere nicht abwischbar, als auch besonders gut auf dem Trägermaterial haftend ist. Die erzeugte Schicht weist eine hohe Porosität auf, so dass die zu behandelnden Stoffe tief in das Material eindringen können. Die mit dem Verfahren erzeugte Titandioxidschicht ist daher sehr gut geeignet als eine poröse und gleichzeitig stabile Schicht für einen Katalysator, mit dem ein effizienter und schneller Schadstoffabbau erzielbar ist.

Da die Suspension bindemittelfrei ist, werden die photokatalytisch aktiven Partikel nicht vom Bindemittel umhüllt. Dadurch wird eine schnellere und schonendere Beschichtung gegenüber den bisher verwendeten Verfahren erreicht.

Das Verfahren zeichnet sich durch eine Reihe von Vorteile aus. Hierzu gehören:
- Ein gesonderter Arbeitsschritt für das Sintern entfällt. Dadurch ergibt sich auch eine Verringerung der Umwandlung von Anastaskristallen (tetragonale holoedrische Kristalle, auch als Oktaedrit bezeichnet) in Rutil, einem häufig vorkommenden Mineral aus der Mineralklasse der "Oxide und Hydroxide". Das Mineral kristallisiert im tetragonalen Kristallsystem mit der chemischen Zusammensetzung TiO₂ und entwickelt meist kurz- bis langprismatische, vertikal gestreifte Kristalle und sehr häufig Kristallzwillinge in Form polysynthetischer, lamellarer und zyklischer Drillinge, Vierlinge und Sechslinge, aber auch körnige bis massige Mineral-Aggregate.
- Die Wirksamkeit der photokatalytischen Beschichtung ist höher.
- Die Schichtdicken können sehr genau eingestellt und feiner abgestuft werden.
- Durch das schlagartige Verdampfen entstehen poröse Schichten, dadurch können Schadstoffe besser in die photokatalytische Schicht eindringen, weshalb ein effizienter und schneller Schadstoffabbau erfolgt.
- Das Verfahren kann automatisiert werden.
- Die aufgebrachten Schichten sind mechanisch stabil und abspülfest.
- Das Verfahren kann für alle Trägermaterialien, die bis zu einer bestimmten Temperatur stabil sind, angewendet werden.
- Das Verfahren ist ressourcenschonend, da nur geringe Mengen Titandioxid eingesetzt werden.

Eine vorteilhafte Ausführung des Verfahrens verwendet eine Titandioxidsuspension aus Wasser mit einem Anteil von 5 bis 20 Masse-% an Titandioxidpartikeln.

Damit können qualitativ hochwertige, gleichmäßige Schichten mit hoher mechanischer Festigkeit erreicht werden.

Das Trägermaterial wird vorteilhaft während des Aufsprühens auf eine Temperatur, die oberhalb der Siedetemperatur der Trägerflüssigkeit liegt, gebracht. Bei der erfindungsgemäßen Verwendung von Wasser als Trägerflüssigkeit liegt die Temperatur im Bereich von 150 bis 250°C. Damit wird eine kurze Bearbeitungszeit und hohe Effektivität gewährleistet.

Erfindungsgemäß wird in dem Träger selbst die Wärme generiert, erfindungsgemäß indem der Träger von einem elektrischen Strom durchflossen wird. Damit kann die Qualität der Beschichtung noch weiter gesteigert werden, weil die Temperatur des Trägers während des Beschichtungsprozesses konstant gehalten werden kann.

Die mit dem Verfahren erzeugte Beschichtung zeichnet sich durch eine Reihe von Vorteilen aus. Hierzu zählen insbesondere
- die erreichbare Schichtdicke und Schichtbindung hängt nicht mehr von der Verarbeitungsgeschwindigkeit ab, somit können auch großflächige Katalysatoren hergestellt werden,
- durch eine genaue Einstellung der Temperatur kann der Aushärtungsprozess unter optimalen Bedingungen stattfinden, ohne dass es zu unkontrollierten Modifikationen im Kristall kommt, was eine bessere Steuerbarkeit ermöglicht.

Bei der Beschichtung von nichtrostenden Stählen sowie passivierter Metalle, insbesondere bei Titan, ergeben sich weitere Vorteile, wie eine gute chemische Beständigkeit gegen Korrosion sowie aufgrund der geringen elektrischen Leitfähigkeit ein hoher Widerstand für eine leichtere elektrische Erwärmung und ein hohes Reflexionsvermögen zur besseren Ausnutzung der tieferliegenden Katalysatorschichten.

Die Verwendung einer Beschichtung auf Titandioxidbasis auf einem gitterförmigen Trägermaterial, die gemäß dem erfindungsgemäßen Verfahren hergestellt ist, erfolgt für einen Katalysator für einen Schadstoffabbau.

Ein Ausführungsbeispiel der Erfindung wird im Folgenden näher erläutert.

Das Beispiel erläutert das Beschichten eines Trägermaterials, welches aus einem feinmaschigen Metallgitter besteht. Derartige Gitter sind sehr gut für den Einsatz zur Behandlung von durchströmenden Gasen und Flüssigkeiten, beispielsweise zur Luft- und Wasserreinigung, geeignet.

Das Gitter besteht aus einem Netz aus Edelstahldraht. Die Maschenweite beträgt 0,25 mm und der Drahtdurchmesser beträgt 0,16 mm. Das Metallgitter ist rechteckig und an zwei gegenüberliegenden Seiten eingespannt, wobei das Gitter von Strom durchflossen wird, mit dem das Metallgitter auf eine Temperatur von ca. 200°C aufgeheizt wird. Mit einer handelsüblichen Spritzpistole wird die Titandioxidsuspension als feines Aerosol, welches aus Wasser und einem Titandioxidpulver besteht, auf das heiße Metallgitter aufgesprüht. Dabei verdampft das Wasser schlagartig und das verbleibende Titandioxidpulver verbindet sich in einem Sinterprozess mit dem Trägermaterial. Dabei wird eine gleichmäßige Titandioxidschicht auf dem Trägermaterial erzeugt. Das Aufsprühen wird so oft wiederholt, bis die gewünschte Schichtdicke erreicht wird. Auf diese Weise können Schichtdicken von 0,5 bis 40 g/m² mit hoher mechanischer Festigkeit erzeugt werden.

## Patentansprüche

1. Verfahren zum bindemittelfreien Aufbringen photokatalytischer Beschichtungen auf Titandioxidbasis auf ein Trägermaterial, wobei eine Titandioxidsuspension mit einer Trägerflüssigkeit als feines Aerosol auf einen heißen Träger aufgesprüht wird, so dass die Trägerflüssigkeit schlagartig verdampft und Titandioxidpartikel der Titandioxidsuspension schlagartig auf das Trägermaterial aufgesintert werden, wobei als Trägerflüssigkeit Wasser verwendet wird,
**dadurch gekennzeichnet, dass** das Trägermaterial während des Aufsprühens eine Temperatur von 150 bis 250°C aufweist, wodurch eine poröse und gleichzeitig stabile Schicht für einen Katalysator für einen effizienten und schnellen Schadstoffabbau entsteht, wobei ein gitterförmiges Trägermaterial verwendet wird und wobei in dem Trägermaterial selbst die Wärme generiert wird, wobei das Trägermaterial von einem elektrischen Strom durchflossen wird.

2. Verfahren nach Anspruch 1, **dadurch gekennzeichnet, dass** die Titandioxidsuspension einen Anteil von 5 bis 20 Masse-% an Titandioxidpartikeln aufweist.

3. Verfahren nach einem der vorhergehenden Ansprüche, **dadurch gekennzeichnet, dass** das Verfahren mehrmals wiederholt wird.

4. Verfahren nach einem der vorhergehenden Ansprüche, **dadurch gekennzeichnet, dass** als Trägermaterial nichtrostendes Material, wie passivierte Metalle, verwendet wird.

## Claims

1. Method for binder-free application of titanium dioxide-based photocatalytic coatings to a support material, where a titanium dioxide suspension with a carrier liquid is sprayed in the form of a fine aerosol onto a hot support, so that the carrier liquid undergoes flash evaporation and titanium dioxide particles of the titanium dioxide suspension undergo flash sintering onto the support material, the carrier liquid used being water,
**characterized in that** during the spray application, the support material has a temperature of 150 to 250°C, thus forming a porous and yet stable layer for a catalyst for efficient and rapid pollutant degradation, a latticelike support material is used and the heat is generated in the support material itself, and the support material is traversed by an electrical current.

2. Method according to Claim 1, **characterized in that** the titanium dioxide suspension has a fraction of 5 to 20 mass% of titanium dioxide particles.

3. Method according to either of the preceding claims, **characterized in that** the method is multiply repeated.

4. Method according to any of the preceding claims, **characterized in that** nonrusting material, such as passivated metals, is used as support material.

## Revendications

1. Procédé d'application sans liant de revêtements catalytiques à base de dioxyde de titane sur un matériau support, dans lequel une suspension d'oxyde de titane est, avec un liquide support sous forme d'un aérosol fin, pulvérisée sur un support chaud, de façon que le liquide support subisse une évaporation instantanée et que les particules de dioxyde de titane de la suspension de dioxyde de titane soient appliquées par frittage immédiat sur le matériau support, le matériau support utilisé étant l'eau, **caractérisé en ce que** le matériau support présente lors de la pulvérisation une température de 150 à 250 °C, ce qui crée une couche poreuse et simultanément stable pour un catalyseur destiné à une élimination efficace et rapide des impuretés, et on utilise un matériau support en forme de grille et il y a dans le matériau support proprement dit génération de chaleur, le matériau support étant traversé par un courant électrique.

2. Procédé selon la revendication 1, **caractérisé en ce que** la suspension de dioxyde de titane présente une proportion de 5 à 20 % en masse de particules de dioxyde de titane.

3. Procédé selon l'une des revendications précédentes, **caractérisé en ce qu'**il est répété à plusieurs reprises.

4. Procédé selon l'une des revendications précédentes, **caractérisé en ce qu'**on utilise comme matériau support un matériau inoxydable, tel que des métaux passivés.
